# EUROPEAN PATENT APPLICATION

(11) **EP 4 670 491 A1**
(43) Date of publication of application: **31.12.2025**
(21) Application number: 25184096.3
(22) Date of filing: 20.06.2025
(51) Int. Cl.: A01G 3/037, A01G 3/053, A01G 3/06, A01G 3/08, A01G 20/47, H02K 9/06

(54) **MOTOR ASSEMBLY FOR GARDENING EQUIPMENT IN GENERAL, AND GARDENING APPARATUS COMPRISING SUCH MOTOR ASSEMBLY**

(30) Priority: 28.06.2024 IT 202400014920
(71) Applicant: Zanon S.R.L., 35011 Campodarsego PD (IT)
(72) Inventor: ZANON, Franco, 35011 CAMPODARSEGO PD (IT)
(74) Representative: Modiano, Micaela Nadia

(57) **Abstract**

The invention concerns a motor assembly (10) for gardening equipment in general, comprising an enclosure (9) enclosing an electric motor (11), having a rotor (12) and a stator provided with windings (13), having an axis of rotation oriented along a first axis (101), said motor assembly (10) being provided with a transmission shaft (14) which protrudes from said rotor (12) along said first axis (101), wherein said motor assembly (10) comprises at least two cooling fans, respectively at least one first fan (15a, 115) and at least one second fan (15b), which are associated with said shaft (14) of said motor (11) .

## Description

The present invention relates to a motor assembly, for gardening equipment in general.

The invention also relates to a gardening apparatus that comprises this motor assembly.

Nowadays, many and varied types of gardening equipment are known and widespread, such as for example electric shears for cutting and/or pruning branches, stalks and plants, by availing of the controlled starting and stopping of a cutting tool which comprises two blades, both movable, or one fixed and the other movable.

Nowadays, the electric motors used to power, specifically, tools for use in the agricultural sector and gardening commonly use a cooling fan provided with a plurality of radial vanes, i.e. vanes arranged radially on a flat fan base and protruding perpendicularly from it; for this reason it is called in the jargon a "radial-type fan" or simply "radial fan".

This type of solution can be applied independently of the direction of rotation of the motor and it ensures a stream of air that always flows in the same direction, whether the motor rotates clockwise or anticlockwise.

Conventional motor assemblies which comprise fans of the radial type are not devoid of drawbacks.

In fact, such a solution does not make it possible to obtain optimal levels of speed and pressure for the air flow, and therefore does not make it possible to ensure optimal cooling for the electric motor.

In light of this drawback, a fan has been introduced, known in the jargon as an "axial-type fan" or simply "axial fan", in which the vanes are also arranged radially but, differently from a radial fan, they are arranged substantially on a plane and are conveniently rotated about their own axes of radial extension, in such a manner as to allow the flow of cooling air to be channeled during the rotation of the fan proper.

An axial fan makes it possible to obtain superior cooling than a radial fan, in terms of speed and power of the motor, and is nowadays used for cooling electric motors with unidirectional rotation.

Motor assemblies that use an axial-type fan still display some room for improvement, however.

For motors that rotate both clockwise and anticlockwise, an axial fan is not capable of ensuring optimal cooling if the motor inverts its direction of travel.

The aim of the present invention is to provide a motor assembly for gardening equipment in general, and a gardening apparatus that comprises such motor assembly, that are capable of improving the known art in one or more of the abovementioned aspects.

Within this aim, an object of the invention is to provide a motor assembly for gardening equipment in general that is capable of offering superior cooling of the electric motor than similar, conventional motor assemblies.

Another object of the invention is to provide a motor assembly that offers a more homogeneous cooling than conventional motor assemblies.

A further object of the invention is to provide a motor assembly that makes it possible to obtain a gardening apparatus that is better-performing, that is to say with superior cutting power and greater battery life.

Another object of the invention is to provide a motor assembly that makes it possible to obtain a gardening apparatus that is easier to handle for the operator using it.

A further object of the present invention is out to overcome the drawbacks of the background art in a manner that is alternative to any existing solutions.

Another object of the invention is to provide a motor assembly for gardening equipment in general that is highly reliable, easy to implement, and at low cost.

This aim and these and other objects which will become more apparent hereinafter are achieved by a motor assembly for gardening equipment in general, which comprises an enclosure enclosing an electric motor, having a rotor and a stator provided with windings, having an axis of rotation oriented along a first axis, said motor assembly being provided with a transmission shaft which protrudes from said rotor along said first axis,
said motor assembly being characterized in that it comprises at least two cooling fans, respectively at least one first fan and at least one second fan, which are associated with said shaft of said motor.

This aim and these and other objects which will become more apparent hereinafter are also achieved by a gardening apparatus, characterized in that it comprises said motor assembly.

Further characteristics and advantages of the invention will become more apparent from the detailed description that follows of a preferred, but not exclusive, embodiment of the motor assembly for gardening equipment in general and of the gardening apparatus that comprises such motor assembly, according to the invention, which is illustrated for the purposes of non-limiting example in the accompanying drawings wherein:
- Figure 1 is a partially cross-sectional front elevation view of the motor assembly, according to the invention;
- Figure 2 is a partially cross-sectional front elevation view of the motor assembly shown in Figure 1, in a first configuration of use thereof;
- Figure 3 is a partially cross-sectional front elevation view of the motor assembly shown in the previous figures, in a second configuration of use thereof;
- Figure 4 is a perspective view of one of the at least two cooling fans of the motor assembly shown in the previous figures, according to the invention;
- Figure 5 is a perspective view of one of the at least two cooling fans of a variation of the motor assembly shown in Figures 1 to 3, according to the invention;
- Figure 6 is a partially cross-sectional front elevation view of a part of the gardening apparatus comprising the motor assembly shown in Figures 1 to 3, according to the invention, in a first configuration of use thereof;
- Figure 7 is a partially cross-sectional front elevation view of a part of the gardening apparatus comprising the motor assembly shown in Figures 1 to 3, according to the invention, in a second configuration of use thereof.

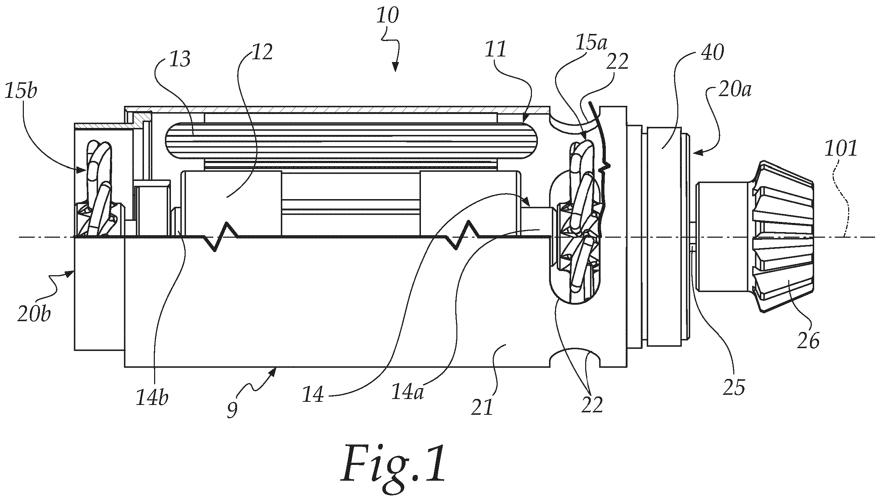

With reference to Figures 1 to 3, the motor assembly for gardening equipment in general is generally designated by the reference numeral 10 and comprises an enclosure 9 which encloses an electric motor 11, with a rotor 12 and a stator provided with windings 13, having an axis of rotation oriented along a first axis 101; the motor assembly 10 is provided with a transmission shaft 14, which protrudes from the rotor 12 along the first axis 101.

According to the invention, the motor assembly 10 comprises at least two cooling fans, respectively at least one first fan 15a and at least one second fan 15b, which are associated with the shaft 14 of the motor 11.

Conveniently, the first fan 15a and the second fan 15b are associated with the motor 11 respectively and substantially at two ends of the shaft 14, respectively a first end 14a and a second end 14b which are mutually opposite along the first axis 101.

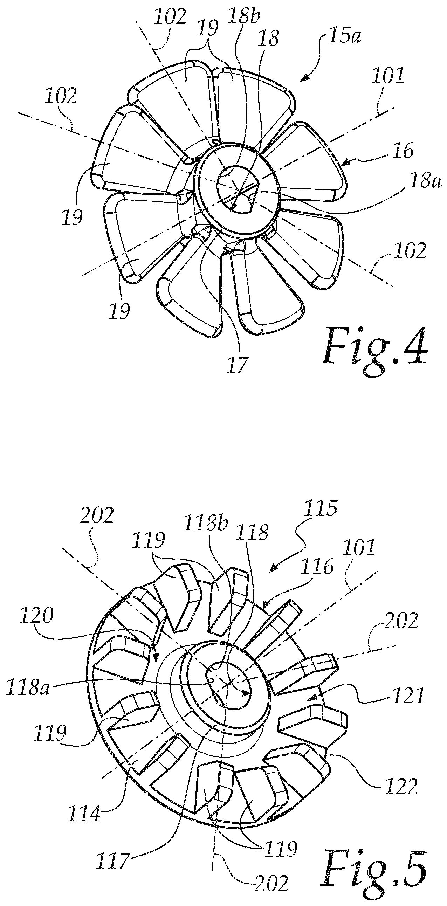

Figure 4 shows an embodiment of the at least two fans and, in particular, only the first fan 15a (which is entirely similar to the second fan 15b, not shown in detail), which comprises an impeller 16 which is provided with:
- a central supporting body 17, provided with a first through hole 18 for the detachable association of the fan 15a or 15b with the shaft 14;
- a plurality of vanes 19 arranged radially around the supporting body 17 along axes that substantially coincide with second axes 102 which define radial directions exiting from the supporting body 17.

More specifically, the supporting body 17 has a substantially cylindrical shape and is oriented, with its axial axis of symmetry, substantially along the first axis 101.

Furthermore, the first hole 18 is contoured: in fact, it has a first, flat perimetric portion 18a and a second, circular perimetric portion 18b, to allow the first fan 15a to be fixed on the shaft 14, in such a manner as to render it integral in rotation with the latter once keyed thereon.

The vanes 19 of the fan 15a are advantageously directly associated with the supporting body 17 and each one has a substantially trapezoidal geometric shape, with longitudinal extension along an axis that coincides with the respective second axis 102.

In addition, conveniently, the vanes 19 are each oriented around the respective second axis 102 in such a manner as to form an acute angle with respect to the plane that is perpendicular to the first axis 101 and so as to allow, in this manner, the flow of air to be channeled between them.

Each one of the vanes 19 furthermore has a substantially radiused outer surface.

A variation of the motor assembly 10 has a different shape of the first fan 15a and/or of the second fan 15b with respect to what is described up to this point.

With particular reference to Figure 5, the illustrated variation of the first fan 15a (and of the second fan 15b) is generally designated by the reference numeral 115.

Conveniently, an impeller 116 comprises in this case a flanged rim 114, having a planar extension and a circular geometric shape, which extends circumferentially around the supporting body 117, which is provided with a hole 118 similar to the hole described above and therefore with a first, flat perimetric portion 118a and a second, circular perimetric portion 118b.

The vanes, indicated with the reference numeral 119, each have a planar extension and protrude from the flanged rim 114 in a direction substantially perpendicular to a first face 120 thereof. Furthermore, they also have a substantially trapezoidal geometric shape with a radial width that is smaller than the radius of the flanged rim 114 and they are arranged radially on the first face 120 at a delimited outer annular region 121 of the perimeter 122 of the flanged rim 114.

The expression "radial width" is used to mean the dimension of the vanes 119 along the radial direction of the flanged rim 114.

In this case too, the vanes 119 are arranged radially along axes that substantially coincide with second axes 202 which identify radial directions exiting from the supporting body 117.

One or more fans 115 thus formed are associated with the shaft 14 of the motor 11, similarly to the fans 15a or 15b described above, the axial axis of symmetry of the supporting body 117 therefore being aligned with the first axis 101.

The motor assembly 10 can advantageously comprise, for example, two cooling fans similar to the first fan 15a (and to the second fan 15b), known in the jargon as an "axial fan", or two cooling fans similar to the variation of embodiment shown in Figure 5 and known in the jargon as a "radial fan". Alternatively, the motor assembly 10 can comprise an axial fan and a radial fan.

Advantageously, the enclosure 9 has a substantially cylindrical shape with an axis of longitudinal extension that coincides substantially with the first axis 101. The enclosure is further provided with two lateral faces, respectively a second face 20a and a third face 20b, which are mutually opposite along the first axis 101 and substantially perpendicular thereto.

The enclosure 9 also comprises a surface 21, at which it is provided with second holes 22 for ventilation which are provided circumferentially and with a substantially constant pitch on a portion thereof that faces either or both of the first fan 15a and the second fan 15b.

Furthermore, the enclosure 9 is also provided with third holes (not visible and not indicated in the figures), provided at the third face 20b.

Conveniently, the motor assembly 10 also comprises a pinion 26, which is aligned, with its axis of rotation, with the first axis 101, is associated with the shaft 14 at a distal end 25 thereof, and protrudes from the first face 20a of the enclosure 9.

An epicyclic reduction gear unit can also be interposed between the pinion 26 and the shaft 14, and is indicated in the figures with the reference numeral 40.

The expression "distal end" refers to the end of the shaft 14 that is opposite to the first end 14a with respect to the first fan 15a.

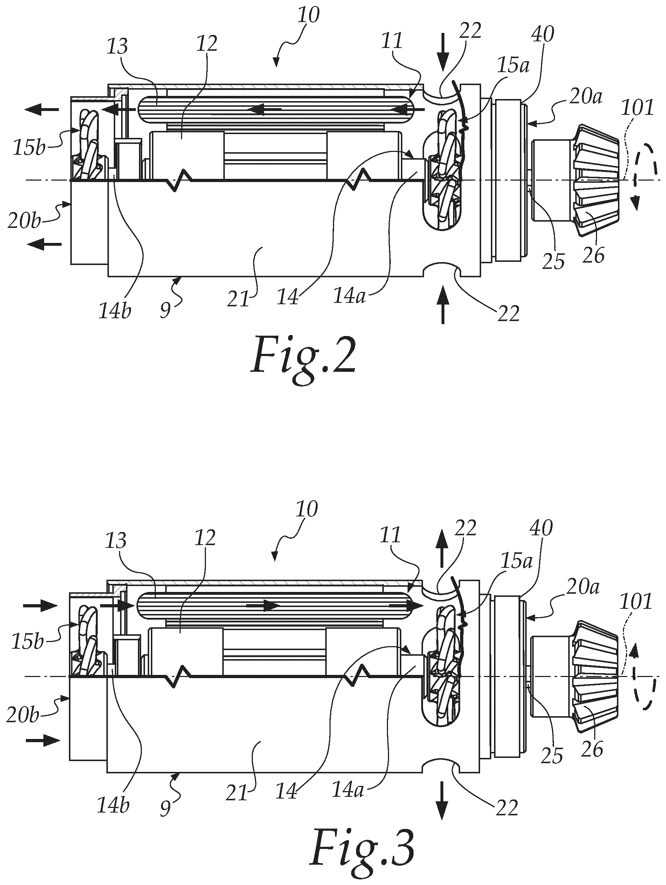

With particular reference to Figures 2 and 3, a plurality of arrows shows the flow of the air for cooling the motor 11 according to the direction of its rotation.

If the motor 11 rotates anticlockwise, the cold air is channeled radially into the enclosure 9 through the second holes 22, while the hot air exits from the third holes.

Alternatively, if the motor 11 rotates clockwise, the cold air is channeled longitudinally into the enclosure 9 through the third holes and the hot air exits from the second holes 22.

The rotations are identified as "clockwise" or "anticlockwise" when observing the rotation of the pinion 26, which agrees with the rotation of the motor 11, looking toward the second lateral face 20a.

The expressions "cold air" and "hot air" refer, respectively, to the air at ambient temperature that is sucked in from the surrounding environment to cool the motor 11, and to the air downstream of the latter, post-cooling.

The motor assembly 10 described up to this point can therefore be used for supplying power to an electrical device, such as, for example, a gardening apparatus.

In fact, the invention also relates to a gardening apparatus that comprises the motor assembly described above.

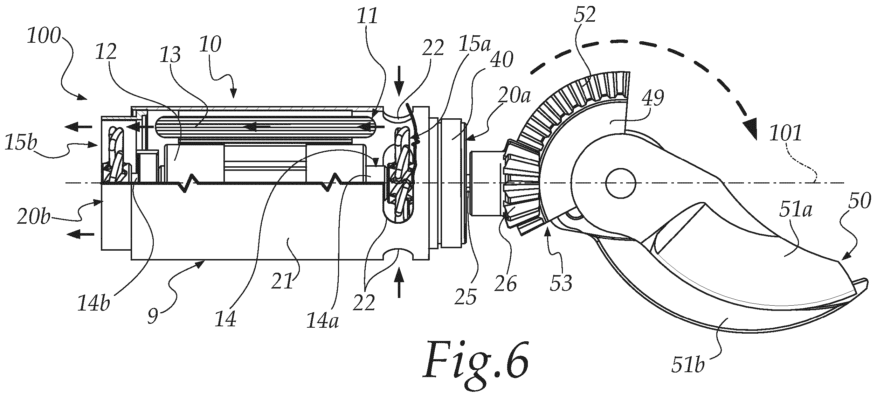

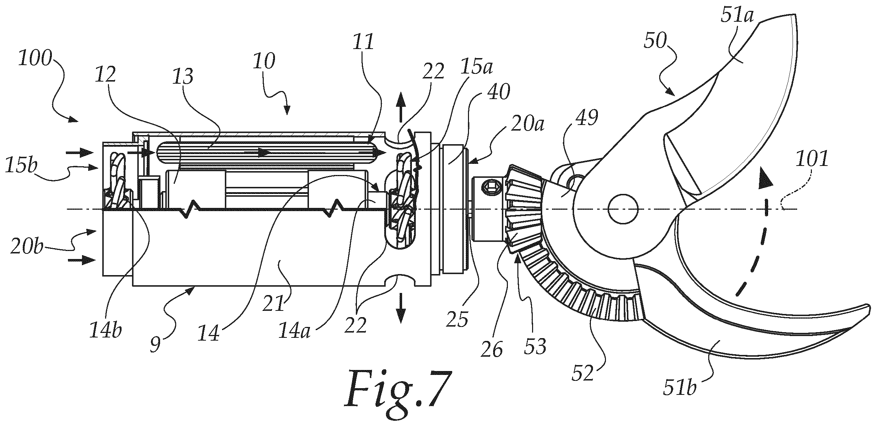

With reference to Figures 6 and 7, a gardening apparatus, and more specifically a pair of electric shears, is generally designated by the reference numeral 100 and comprises, according to the invention, the motor assembly 10.

Advantageously, the apparatus 100 comprises cutting means 50, defined by two blades, respectively a first blade 51a, which is movable, and a second blade 51b, which is fixed. Alternatively, both blades 51a and 51b can be movable.

The blades 50a and 50b are mutually pivoted and an element 49 is also pivoted with them, and is integral in rotation with the first blade 51a and is provided with a crown gear 52. Geometrically, the element 49 is circular sector-shaped and the crown gear 52 extends substantially along an arc of its circumference; the crown gear 52 and the pinion 26 form a kinematic coupling, and in particular a bevel gear pair 53, which transmits motion between mutually perpendicular axes and, more specifically, from the first axis 101, about which the rotor 12 rotates , to an axis which is perpendicular to the plane of arrangement of the first blade 51a and of the second blade 51b, not shown in the figures.

The motor assembly 10, the bevel gear pair 53 and, partially, the blades 51a and 51b are enclosed by a box-like body, not shown in the figures, which is provided with an ergonomic hand grip for being held by a user and with a trigger, which when pressed determines the opening and/or closing of the blades 51a and 51b, as a consequence of a clockwise and/or anticlockwise rotation of the motor 11.

The abovementioned figures show the apparatus 100 in two configurations of use.

In more detail, the arrows in Figure 6 show the flow of air following an anticlockwise rotation of the motor 11, which causes the blades 51a and 51b to close, as indicated by the curved arrow. The arrows in Figure 7 on the other hand show the flow of air following a clockwise rotation of the motor 11, which by contrast causes the blades 51a and 51b to open, indicated by an additional curved arrow.

The operation of the apparatus is clear and intuitive from the foregoing description.

More specifically, the electric motor 11 is powered by an external power source, which can be, for example, battery-powered or powered via a power cable that uses the domestic mains.

The user presses the trigger, not shown in the figures, and actuates the motor 11, of which the rotor 12 rotates about the first axis 101 integrally with the shaft 14 and with the fans 15a and 15b keyed thereon. A rotation of the rotor 12 also generates a rotation of the pinion 26. Assuming that in the initial condition the first blade 51a and the second blade 51b are in the closed condition, a clockwise rotation of the pinion 26 consequent to the pressure of the trigger produces a rotation of the first element 49 and, as a consequence, of the movable first blade 51a with respect to the fixed second blade 51b. Once the open condition shown in Figure 7 is reached, the user presses the trigger again, which generates an anticlockwise rotation of the pinion 26 and consequently the closure of the first blade 51a with respect to the second blade 51b. It is this closed stage that performs the cutting and/or pruning of branches, stalks and/or plants.

Depending on the stage of opening or closure of the blades 51a and 51b, and therefore depending on the rotation required of the electric motor 11, the air flow is channeled into the enclosure 9 differently, so ensuring optimal cooling of the motor assembly 10 and high performance of the apparatus 100 or indeed of any other powered electric tool.

In practice it has been found that the invention fully achieves the intended aim and objects by providing a motor assembly for gardening equipment in general, and a gardening apparatus comprising such motor assembly, which are capable of ensuring a superior cooling of the motor, and in particular of its windings, compared to similar, conventional motor assemblies.

By virtue of the introduction of two cooling fans, arranged respectively on opposite lateral faces of the motor, it is possible to obtain a cooling air flow that is more homogeneous and better-performing.

The solution proposed is particularly effective for pruning shears and scissors, in which the motor accelerates and brakes in a stepped manner owing to the high number of opening and closing cycles of the blades, required by the use of the tools.

An advantage of the invention is therefore that of providing a gardening apparatus that performs better from the point of view of cutting power and battery life.

Another advantage of the invention consists in that it ensures cooling that does not create discomfort for the user, given that, owing to the structural shape of similar tools, the motor is located in a part of the box-like body where the hand grip is.

Another advantage of the invention is that it avoids bothersome overheating which could result in the user's work activity being interrupted.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102024000014920 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A motor assembly (10) for gardening equipment in general, comprising an enclosure (9) enclosing an electric motor (11), having a rotor (12) and a stator provided with windings (13), having an axis of rotation oriented along a first axis (101), said motor assembly (10) being provided with a transmission shaft (14) which protrudes from said rotor (12) along said first axis (101),
said motor assembly (10) being **characterized in that** it comprises at least two cooling fans, respectively at least one first fan (15a, 115) and at least one second fan (15b), which are associated with said shaft (14) of said motor (11).

2. The motor assembly (10) according to claim 1, **characterized in that** said at least one first fan (15a, 115) and at least one second fan (15b) are associated with said motor (11) respectively and substantially at two ends of said shaft (14), respectively a first end (14a) and a second end (14b) which are mutually opposite along said first axis (101).

3. The motor assembly (10) according to claim 1, **characterized in that** said first fan (15a, 115) and said second fan (15b) comprise an impeller (16, 116) provided with:
- a central supporting body (17, 117), provided with a first through hole (18, 118) for the detachable association of said fans (15a, 15b, 115) with said shaft (14), said supporting body (17, 117) having a substantially cylindrical shape and being oriented substantially along said first axis (101);
- a plurality of vanes (19, 119) arranged radially around said supporting body (17, 117) along axes that substantially coincide with second axes (102, 202) which define radial directions exiting from said supporting body (17, 117).

4. The motor assembly (10) according to claim 3, **characterized in that** said first through hole (18, 118) is contoured, said first through hole (18, 118) having a first, flat perimetric portion (18a, 118a) and a second, circular perimetric portion (18b, 118b) to allow said fans (15a, 15b, 115) to be fixed on said shaft (14).

5. The motor assembly (10) according to claim 3, **characterized in that** said vanes (19) of at least one of said first fan (15a) and said second fan (15b) are directly associated with said supporting body (17), said vanes (19) each having a substantially trapezoidal geometric shape with a longitudinal extension along an axis that coincides with said second axes (102), said vanes (19) each being oriented around the respective second axis (102) so as to form an acute angle with respect to a plane that is perpendicular to said first axis (101).

6. The motor assembly (10) according to claim 3, **characterized in that** said impeller (116) of at least one of said first fan (115) and said second fan comprises a flanged rim (114), having a planar extension and a circular geometric shape, extending circumferentially around said supporting body (117), each of said vanes (119) having a planar extension, protruding from said flanged rim (114) in a direction substantially perpendicular to a first face (120) thereof and having a substantially trapezoidal geometric shape with a radial width that is smaller than the radius of said flanged rim (114), said vanes (119) being arranged radially on said first face (120) along axes that substantially coincide with said second axes (202) and at a delimited outer annular region (121) of the perimeter (122) of said flanged rim (114).

7. The motor assembly (10) according to one or more of the preceding claims, **characterized in that** said enclosure (9) has a substantially cylindrical shape with a longitudinal axis of extension that substantially coincides with said first axis (101), said enclosure having two lateral faces, respectively a second face (20a) and a third face (20b), which are mutually opposite along said first axis (101) and substantially perpendicular thereto, said enclosure (9) also comprising a surface (21) at which it is provided with second holes (22) for ventilation which are provided circumferentially and with a substantially constant pitch on a portion of said surface (21) that faces either or both of said first fan (15a, 15b, 115) and said second fan 15b, said enclosure (9) also being provided with third holes provided at said third face (20b).

8. The motor assembly (10) according to one or more of the preceding claims, **characterized in that** it comprises a pinion (26) which is aligned, with its axis of rotation, with said first axis (101) and protrudes from said first face (20a) of said enclosure (9), said pinion (26) being associated with said shaft (14) at a distal end thereof (25).

9. A gardening apparatus (100), **characterized in that** it comprises a motor assembly (10) according to one or more of the preceding claims.

10. The apparatus (100) according to claim 9, **characterized in that** it comprises cutting means (50) defined by two blades, respectively, a first blade (51a) which is movable and a second blade (51b) which is fixed, said blades (50a, 50b) being pivoted to each other and also being pivoted with an element (49) which is integral in rotation with said first blade (51a), said element (49) being circular sector-shaped and being provided with a crown gear (52) extending substantially along an arc of its circumference, said crown gear (52) and said pinion (26) forming a bevel gear pair (53) which transmits motion between said first axis (101) and an axis which is perpendicular to the plane of arrangement of said first blade (51a) and of said second blade (51b).
